# EUROPEAN PATENT APPLICATION

(11) **EP 3 846 582 A1**
(43) Date of publication of application: **07.07.2021**
(21) Application number: 19854340.7
(22) Date of filing: 29.08.2019
(51) Int. Cl.: H05B 3/20, B32B 5/08, B32B 15/02

(54) **SHEET-FORM HEATING ELEMENT, AND HEATING DEVICE**

(30) Priority: 29.08.2018 JP 2018160468
(71) Applicant: LINTEC CORPORATION, Itabashi-ku Tokyo 173-0001 (JP)
(72) Inventor: ITO, Masaharu, Tokyo 173-0001 (JP); MORIOKA, Takashi, Tokyo 173-0001 (JP); HAGIHARA, Yoshiaki, Tokyo 173-0001 (JP)
(74) Representative: Gille Hrabal Partnerschaftsgesellschaft mbB Patentanwälte
(86) International application number: PCT/JP2019/033839
(87) International publication number: WO 2020/045550

(57) **Abstract**

A sheet-shaped heat-generating element (10) includes a quasi-sheet structure (20) including a plurality of metal wires (22) arranged at an interval, the metal wires (22) each including a core containing a first metal as a main component and a metal coating film provided on an exterior side of the core, the metal coating film containing a second metal different from the first metal as a main component. A volume resistivity of the first metal is in a range from 3.0 × 10⁻⁶ [Ω·cm] to 5.0 × 10⁻⁴ [Ω·cm] and a reference electrode potential of the second metal is +0.34 V or more.

## Description

### TECHNICAL FIELD

The present invention relates to a sheet-shaped heat-generating element and a heat generator.

### BACKGROUND ART

A sheet-shaped heat-generating element including a quasi-sheet structure with a plurality of metal wires arranged at an interval has been known. The sheet-shaped heat-generating element is likely to be usable as, for instance, a material of a heating textile, a member that causes a variety of goods to generate heat, and a heat-generating element for a heat generator.

For instance, Patent Literature 1 describes, as a sheet used for a heat-generating element, a sheet including a quasi-sheet structure with a plurality of linear bodies arranged in parallel with each other at an interval, the linear bodies having a volume resistivity R in a range from 1.0 × 10⁻⁷ Ωcm to 1.0 × 10⁻¹ Ωcm and unidirectionally extending. Regarding the sheet, a relationship between a diameter D of the linear bodies and an interval L between adjacent ones of the linear bodies satisfies an expression: L/D ≥ 3 and a relationship among the diameter D of the linear bodies, the interval L between adjacent ones of the linear bodies, and the volume resistivity R of the linear bodies satisfies an expression: (D²/R) × (1/L) ≥ 0.003 (in the expression, units of D and L are cm).

Further, Patent Literature 2 describes a heating sheet for three-dimensional forming including a quasi-sheet structure with a plurality of unidirectionally extending metal wires arranged at an interval. The heating sheet for three-dimensional forming includes the quasi-sheet structure having a metal wire diameter in a range from 7 µm to 75 µm and a resin protection layer disposed on one surface of the quasi-sheet structure and a total thickness of a layer disposed on the surface of the quasi-sheet structure provided with the resin protection layer is 1.5 to 80 times as large as the metal wire diameter.

### CITATION LIST

### PATENT LITERATURE(S)

Patent Literature 1: WO 2017-086395
Patent Literature 2: WO 2018-097321

### SUMMARY OF THE INVENTION

### PROBLEM(S) TO BE SOLVED BY THE INVENTION

However, when the heating sheet of Patent Literature 1 or 2 is attached to electrodes and caused to generate heat, a resistance of a connection between the linear bodies or the metal wires and the electrodes is likely to increase. An increase in the resistance of the connection between the linear bodies or the metal wires and the electrodes may cause electrode portions connected to the linear bodies or the metal wires to abnormally generate heat.

An object of the invention is to provide a sheet-shaped heat-generating element configured to reduce, when attached to electrodes and caused to generate heat, a resistance of a connection between a metal wire and the electrodes and a heat generator including the sheet-shaped heat-generating element.

### MEANS FOR SOLVING THE PROBLEM(S)

According to an aspect of the invention, a sheet-shaped heat-generating element includes a quasi-sheet structure including a plurality of metal wires arranged at an interval, the metal wires each including a core containing a first metal as a main component and a metal coating film provided on an exterior side of the core, the metal coating film containing a second metal different from the first metal as a main component, in which a volume resistivity of the first metal is in a range from 3.0 × 10⁻⁶ [Ω·cm] to 5.0 × 10⁻⁴ [Ω·cm] and a reference electrode potential of the second metal is +0.34 V or more.

In the sheet-shaped heat-generating element according to the aspect of the invention, it is preferable that the second metal be at least one selected from the group consisting of gold, platinum, palladium, silver, copper, and an alloy, and the alloy for the second metal contain at least two metals selected from the group consisting of gold, platinum, palladium, silver, and copper.

In the sheet-shaped heat-generating element according to the aspect of the invention, it is preferable that a volume resistivity of the second metal be less than 2.0 × 10⁻⁵ [Ω·cm].

In the sheet-shaped heat-generating element according to the aspect of the invention, it is preferable that the first metal be tungsten or molybdenum.

In the sheet-shaped heat-generating element according to the aspect of the invention, it is preferable that a diameter of each of the metal wires be in a range from 13 µm to 50 µm.

In the sheet-shaped heat-generating element according to the aspect of the invention, it is preferable that the sheet-shaped heat-generating element further include an adhesive agent layer and the quasi-sheet structure be in contact with the adhesive agent layer.

In the sheet-shaped heat-generating element according to the aspect of the invention, it is preferable that the sheet-shaped heat-generating element further include a base on a side of the adhesive agent layer opposite the quasi-sheet structure.

In the sheet-shaped heat-generating element according to the aspect of the invention, it is preferable that the metal wires be brought into contact with electrodes in use.

According to another aspect of the invention, a sheet-shaped heat-generating element includes a quasi-sheet structure including a plurality of metal wires arranged at an interval, the metal wires each including a core containing a first metal as a main component and a metal coating film provided on an exterior side of the core, the metal coating film containing a second metal different from the first metal as a main component, in which the first metal is tungsten, iron, molybdenum, nickel, titanium, stainless steel, brass, phosphor bronze, beryllium copper, iron nickel, Nichrome, Kanthal, Hastelloy, or rhenium tungsten, the second metal is at least one selected from the group consisting of gold, platinum, palladium, silver, copper, and an alloy, and the alloy for the second metal contains at least two metals selected from the group consisting of gold, platinum, palladium, silver, and copper.

According to still another aspect of the invention, a heat generator includes: the sheet-shaped heat-generating element according to the aspect of the invention; and electrodes, in which the plurality of metal wires of the sheet-shaped heat-generating element are arranged while being at least partially connected to the electrodes, a surface of the electrodes connected to the metal wires is formed of a third metal, and a reference electrode potential of the third metal is +0.5 V or more.

According to yet another aspect of the invention, a heat generator includes: the sheet-shaped heat-generating element according to the aspect of the invention; and electrodes, in which the sheet-shaped heat-generating element is bonded to the electrodes via the adhesive agent layer, and the metal wires are in contact with the electrodes.

According to the invention, it is possible to provide a sheet-shaped heat-generating element configured to reduce, when attached to electrodes and caused to generate heat, a resistance of a connection between a metal wire and the electrodes and a heat generator including the sheet-shaped heat-generating element.

### BRIEF DESCRIPTION OF DRAWING(S)

Fig. 1 is a schematic perspective view of a sheet-shaped heat-generating element according to a first exemplary embodiment.
Fig. 2 is a cross-sectional view of a cross section taken along a II-II line in Fig. 1.
Fig. 3 is a schematic cross-sectional view of a metal wire of the first exemplary embodiment.
Fig. 4 is a schematic perspective view of a sheet-shaped heat-generating element according to a second exemplary embodiment.
Fig. 5 is a schematic perspective view of a sheet-shaped heat-generating element according to a third exemplary embodiment.
Fig. 6 is a schematic perspective view of a sheet-shaped heat-generating element according to a fourth exemplary embodiment.
Fig. 7 is a schematic perspective view of a heat generator according to a fifth exemplary embodiment.
Fig. 8 is a cross-sectional view of an implementation of contact between electrodes and metal wires.
Fig. 9 is a cross-sectional view of another implementation of contact between the electrodes and the metal wires.
Fig. 10 is a cross-sectional view of still another implementation of contact between the electrodes and the metal wires.

### DESCRIPTION OF EMBODIMENT(S)

### First Exemplary Embodiment

Description will be made below on the invention with reference to the attached drawings with exemplary embodiments cited as examples. The invention is not limited to the contents of the exemplary embodiments. It should be noted that some parts are shown on an enlarged scale or a reduced scale in the drawings for the convenience of explanation.

### Sheet-Shaped Heat-Generating Element

A sheet-shaped heat-generating element 10 according to a first exemplary embodiment is attached to electrodes in use.

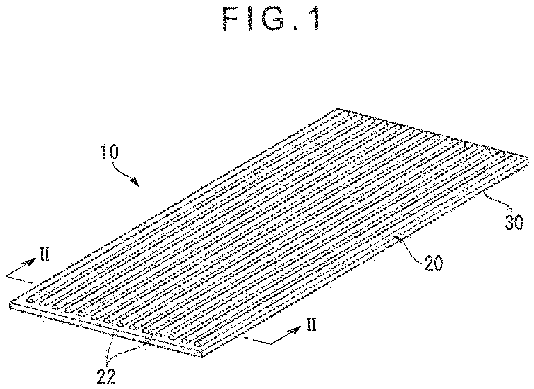

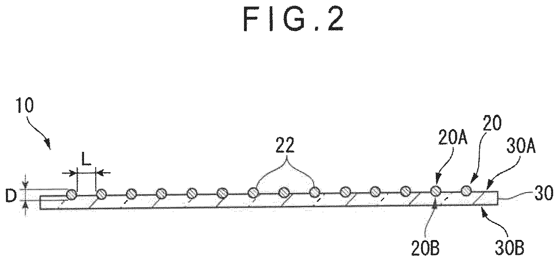

The sheet-shaped heat-generating element 10 according to the exemplary embodiment includes, for instance, a quasi-sheet structure 20 with a plurality of metal wires 22 arranged at an interval and an adhesive agent layer 30 as shown in Fig. 1 and Fig. 2. Specifically, for instance, in the sheet-shaped heat-generating element 10, the quasi-sheet structure 20 is stacked on the adhesive agent layer 30.

It should be noted that 20A denotes one surface of the quasi-sheet structure 20 (hereinafter, referred to as a "first surface 20A") opposite a surface on which the adhesive agent layer 30 is stacked hereinafter. 20B denotes the other surface of the quasi-sheet structure 20 (hereinafter, referred to as a "second surface 20B") on which the adhesive agent layer 30 is stacked (see Fig. 2). 30A denotes one surface of the adhesive agent layer 30 (hereinafter, referred to as a "first adhesive surface 30A") on which the quasi-sheet structure 20 is stacked. 30B denotes the other surface of the adhesive agent layer 30 (hereinafter, referred to as a "second adhesive surface 30B") opposite the surface on which the quasi-sheet structure 20 is stacked (see Fig. 2).

In other words, in the sheet-shaped heat-generating element 10 according to the exemplary embodiment, the quasi-sheet structure 20 and the adhesive agent layer 30 are stacked on each other with the second surface 20B of the quasi-sheet structure 20 and the first adhesive surface 30A of the adhesive agent layer 30 facing each other.

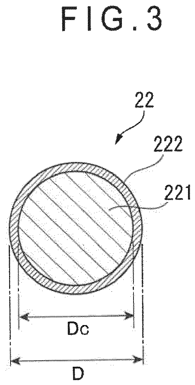

The metal wires 22 of the exemplary embodiment each include a core 221 containing a first metal as a main component, a metal coating film 222 disposed on an exterior side of the first metal core 221 and containing a second metal different from the first metal as a main component as shown in Fig. 3. In Fig. 3, D denotes a diameter of the metal wires 22 and Dc denotes a diameter of the core 221.

A volume resistivity of the first metal (hereinafter, also referred to as a "volume resistivity R_{M1}") is in a range from 3.0 × 10⁻⁶ [Ω·cm] to 5.0 × 10⁻⁴ [Ω·cm].

A reference electrode potential of the second metal (hereinafter, also referred to as a "reference electrode potential E_{M2}") is +0.34 V or more.

The wording "contain the first metal as a main component" means that the first metal accounts for 50 mass% or more of the entirety of the core. A ratio of the first metal to the entirety of the core is preferably 70 mass% or more, more preferably 80 mass% or more, further preferably 90 mass% or more.

The wording "contain the second metal as a main component" means that the second metal accounts for 50 mass% or more of the entirety of the metal coating film. A ratio of the second metal to the metal coating film is preferably 70 mass% or more, more preferably 80 mass% or more, further preferably 90 mass% or more.

The sheet-shaped heat-generating element 10 of the exemplary embodiment enables reducing a resistance of a connection between the metal wires 22 and the electrodes when attached to the electrodes and caused to generate heat (hereinafter, also referred to as "the effect of the exemplary embodiment").

The reason why the effect of the exemplary embodiment is achieved is speculated as follows.

In a case where a sheet-shaped heat-generating element with a plurality of metal wires arranged is attached to electrodes in use, it is usually necessary to increase a volume resistivity of the metal wires to a relatively high level. This can increase a resistance of the metal wires, allowing for making the sheet-shaped heat-generating element likely to generate heat.

On the other hand, the metal wires with a relatively high volume resistivity tend to be relatively low in reference electrode potential and thus have a property of being likely to suffer generation of an oxide film on surfaces of the metal wires due to a change with time elapsed after production. With the oxide film generated on the surfaces, the resistance between the metal wires and the electrodes or a connection member increases, which sometimes results in abnormal heat generation of electrode portions connected to the metal wires.

In this regard, the abnormal heat generation refers to a state where a temperature of the electrode portions where the metal wires and the electrodes are connected becomes higher than that of a region where no electrode is present and only the quasi-sheet structure generates heat.

A temperature of the electrode portions connected to the metal wires resulting from applying a voltage of 2 V for 30 seconds to a sheet-shaped heat-generating element having been stored under hygrothermal environment (85 degrees C, relative humidity 85%) for 20 hours is used as an index of abnormal heat generation herein. The details will be described in Example section.

For the sheet-shaped heat-generating element 10 of the exemplary embodiment, the metal wires 22 each provided with the metal coating film 222 containing the second metal as a main component on the exterior side of the core 221 containing the first metal as a main component are employed as the plurality of metal wires 22 constituting the quasi-sheet structure 20 as shown in Fig. 3.

Further, the volume resistivity R_{M1} of the first metal is set as relatively high as in a range from 3.0 × 10⁻⁶ [Ω·cm] to 5.0 × 10⁻⁴ [Ω·cm] and the reference electrode potential E_{M2} of the second metal is set as relatively high as +0.34 V or more.

By virtue of the volume resistivity R_{M1} of the first metal being in the above range, the core 221 is likely to generate heat. Further, by virtue of the reference electrode potential E_{M2} of the second metal being in the above range, an oxide film is unlikely to be generated on the surfaces of the metal wires 22 (i.e., the surface of the coating film 222) due to a change with time elapsed after production.

In other words, the metal wires 22 of the exemplary embodiment allow for achieving a balance between a heat-generation function as a heat-generating element and a reduction in generation of an oxide film on the surfaces of the metal wires.

Meanwhile, a typical sheet-shaped heat-generating element, which includes a quasi-sheet structure with a plurality of metal wires arranged, is likely to abnormally generate heat when attached to electrodes and caused to generate heat. However, in the exemplary embodiment, the resistance of the connection between the metal wires 22 and the electrodes can be reduced, allowing for preventing such abnormal heat generation of the electrode portions.

### Quasi-Sheet Structure

The quasi-sheet structure 20 has a structure where the plurality of unidirectionally extending metal wires 22 are arranged at an interval therebetween. Specifically, for instance, the quasi-sheet structure 20 has a structure where the plurality of linearly extending metal wires 22 are arranged at regular intervals in a direction perpendicular to a length direction of the metal wires 22. In other words, the quasi-sheet structure 20 has, for instance, a structure where the metal wires 22 are arranged in stripes.

### Metal Wires

The metal wires 22 each include the core 221 and the metal coating film 222 provided on the exterior side of the core 221.

### Core

The core 221 contains the first metal as a main component. It should be noted that the first metal is a concept including alloy. For instance, in a case where brass accounts for 50 mass% or more of the entirety of the core, the main component of the core is brass that is alloy (first metal).

The volume resistivity R_{M1} of the first metal is in a range from 3.0 × 10⁻⁶ [Ω·cm] to 5.0 × 10⁻⁴ [Ω·cm], preferably in a range from 3.5 × 10⁻⁶ [Ω·cm] to 1.5 × 10⁻⁴ [Ω·cm], more preferably in a range from 4.0 × 10⁻⁶ [Ω·cm] to 9.0 × 10⁻⁵ [Ω·cm].

At the volume resistivity R_{M1} of the first metal of 3.0 × 10⁻⁶ [Ω·cm] or more, the metal wire 22 is likely to generate heat.

At the volume resistivity R_{M1} of the first metal of 5.0 × 10⁻⁴ [Ω·cm] or less, the resistance relative to the electrodes caused when the sheet-shaped heat-generating element 10 is attached to the electrodes and caused to generate heat is likely to decrease. This allows for reducing an applied voltage necessary for the same current, which results in an excellent safety of an end product, i.e., a heat generator.

The volume resistivity R_{M1} of the first metal is a known value at 25 degrees C, that is, a value mentioned in Kagaku Binran (Kiso-hen) (Handbook of Chemistry (Basic)), revised 4th edition (editor: The Chemical Society of Japan). A value of the volume resistivity R_{M1} of an alloy not mentioned in Kagaku Binran is a value disclosed by a manufacturer of the alloy.

In a case where the first metal with the volume resistivity R_{M1} in the above range is used, the reference electrode potentials (hereinafter, also referred to as "E_{M1}") of almost all the metals usable as the first metal are less than +0.34 V in consideration of production costs, etc. as well.

In the exemplary embodiment, even if the first metal with the reference electrode potential E_{M1} of less than +0.34 V is used, an oxide film is unlikely to be generated on the surfaces of the metal wires 22 due to a change with time elapsed after production by virtue of the reference electrode potential E_{M2} of the second metal being within the predetermined range as described above.

The reference electrode potential E_{M1} of the first metal is a material-inherent value, which is a known value.

The reference electrode potential E_{M1} of the first metal is determined in the following method.

It should be noted that in a case where the first metal is tungsten, the reference electrode potential of tungsten is estimated as follows. Since a potential at which tungsten oxide (WO₂) is generated from tungsten (W) in the presence of water in a system is -0.12 V, the reference electrode potential of tungsten is estimated to be less than +0.34 V.

An alloy tends to exhibit a considerably lower reference electrode potential than a metal component with a larger reference electrode potential even when an additive amount of a metal component with a smaller reference electrode potential is small, since the metal component with the smaller reference electrode potential is first ionized by corrosion. For instance, in a case where the first metal is brass, considering that zinc first precipitates, the reference electrode potential of copper is +0.34, and the reference electrode potential of zinc is -0.76 V, the reference electrode potential of brass, which is attracted toward the reference electrode potential of zinc, is less than +0.34 V.

The core 221 is not limited as long as it contains the first metal as a main component.

Examples of the first metal include metals such as tungsten (5.7 × 10⁻⁶), iron (6.5 × 10⁻⁶), molybdenum (5.2 × 10⁻⁶), nickel (6.8 × 10⁻⁶), and titanium (4.2 × 10⁻⁵). Numerical values in brackets are volume resistivities of the metals (unit: Ω·cm).

The examples of the first metal also include alloys such as stainless steel (7.3 × 10⁻⁵), brass (7 × 10⁻⁶), phosphor bronze (7.8 × 10⁻⁶), beryllium copper (7.7 × 10⁻⁶), iron nickel (5.0 × 10⁻⁵), Nichrome (1.0 × 10⁻⁴), Kanthal (1.45 × 10⁻⁴), Hastelloy (1.3 × 10⁻⁴), and rhenium tungsten (7.5 × 10⁻⁶). Numerical values in brackets are volume resistivities of the alloys (unit: Ω·cm).

Among the above, the first metal is preferably tungsten, molybdenum, nickel, or brass, more preferably tungsten or molybdenum. It should be noted that brass is a copper-zinc alloy and is typically an alloy containing, in mass ratio, 60% to 95% copper and 5% to 40% zinc.

In a case where the first metal is tungsten or molybdenum, the thinned metal wire 22 is easily obtainable and the less breakable core 221 is easily obtainable. Further, the first metal is preferably tungsten or molybdenum because the volume resistivity R_{M1} becomes a lower value while exceeding 3.0 × 10⁻⁶ Ω·cm.

A shape of a cross section of the core 221 is not limited and may be polygonal shape, a flat shape, an oval shape, a circular shape, or the like. The shape of the cross section of the core 221 is preferably an oval shape or a circular shape in terms of, for instance, affinity of the metal wire 22 to the adhesive agent layer 30.

In a case where the cross section of the core 221 is in a circular shape, in terms of facilitating adjustment of the diameter of the metal wire 22 to fall within a later-described range, a diameter Dc of the core 221 is preferably in a range from 5 µm to 74 µm, more preferably in a range from 8 µm to 59 µm, further preferably in a range from 12 µm to 49 µm.

In a case where the cross section of the core 221 is in an oval shape, a long diameter is preferably in a range similar to that of the above diameter Dc.

### Metal Coating Film

The metal coating film 222 contains the second metal as a main component. The second metal is different from the first metal. The second metal is a concept including alloy as the first metal.

The reference electrode potential E_{M2} of the second metal is +0.34 V or more, preferably +0.5 V or more, more preferably +0.7 V or more, further preferably +1.0 V or more. An upper limit of the reference electrode potential E_{M2} of the second metal is +2.0 V or less, more preferably +1.6 V or less.

Abnormal heat generation, which would occur when the sheet-shaped heat-generating element 10 is attached to the electrodes, is unlikely to occur in a case where electrodes are attached one-to-one to the metal wires 22 where being more likely to occur in a case a single electrode is attached to the plurality of metal wires 22 due to the presence of a plurality of portions where the metal wires 22 and the electrodes are connected to each other.

At the reference electrode potential E_{M2} of the second metal of +0.34 V or more, abnormal heat generation is unlikely to occur when the sheet-shaped heat-generating element 10 is attached to the electrodes. In addition, the formation of an oxide film on the surfaces of the metal wires 22 with time can be reduced, so that other abnormalities resulting from the formation of the oxide film are likely to be reduced.

For instance, metal wires each having a core coated with graphite do not suffer the formation of an oxide film but a resistance of a connection between the metal wires and the electrodes cannot be reduced. In contrast, for instance, the metal wires 22 each having the core 221 coated with gold, the reference electrode potential E_{M2} of which is high, is favorable in terms of both a reduction in the formation of an oxide film and the resistance of the connection between the metal wires and the electrodes.

The reference electrode potential E_{M2} of the second metal is a material-inherent value.

A volume resistivity R_{M2} of the second metal is preferably less than 2.0 × 10⁻⁵ [Ω·cm], more preferably less than 1.5 × 10⁻⁵ [Ω·cm], further preferably less than 3.0 × 10⁻⁶ [Ω·cm]. A lower limit of the volume resistivity R_{M2} of the second metal is preferably 1.0 × 10⁻⁶ [Ω·cm] or more.

At the volume resistivity R_{M2} of the second metal of less than 2.0 × 10⁻⁵ [Ω·cm], the resistance of the connection between the metal wires 22 and the electrodes is likely to be reduced as compared with a case where metal wires (core) without a metal coating film are connected to the electrodes.

The volume resistivity R_{M2} of the second metal is a known value at 25 degrees C, that is, a value mentioned in Kagaku Binran (Kiso-hen) (Handbook of Chemistry (Basic)), revised 4th edition (editor: The Chemical Society of Japan). A value of the volume resistivity R_{M2} of an alloy not mentioned in Kagaku Binran is a value disclosed by a manufacturer of the alloy.

The metal coating film 222, which contains the second metal as a main component, is not limited as long as the reference electrode potential E_{M2} of the second metal is +0.34 V or more.

Examples of the second metal include gold, platinum, palladium, silver, copper and an alloy. Examples of the alloy include an alloy containing at least two metals selected from the group consisting of gold, platinum, palladium, silver, and copper.

The second metal is preferably at least one selected from the group consisting of gold, platinum, palladium, silver, copper and the alloy (an alloy containing at least two metals selected from the group consisting of gold, platinum, palladium, silver, and copper), more preferably at least one selected from the group consisting of gold, platinum, palladium, silver and the alloy.

In terms of a reduction in the resistance of the connection between the metal wires 22 and the electrodes, a thickness of the metal coating film 222 is preferably in a range from 0.01 µm to 3 µm, more preferably in a range from 0.02 µm to 1 µm, further preferably in a range from 0.03 µm to 0.7 µm.

The thickness of the metal coating film 222 is measured by, for instance, observing a cross section of each of the metal wires 22 of the quasi-sheet structure 20 with an electron microscope (for instance, manufactured by Carl Zeiss Meditec AG, Product No. Cross Beam 550).

The metal wires 22 may each include an intermediate layer between the core 221 and the metal coating film 222. With the metal wires 22 each including the intermediate layer, it is possible to reduce dispersion of a metal contained in the core 221. The intermediate layer serves to protect the core 221, making the properties (volume resistivity, etc.) of the core 221 more maintainable.

The intermediate layer can be formed by a method similar to that of the metal coating film 222.

Examples of the intermediate layer include layers of metals different from the second metal such as a nickel layer, a nickel alloy layer, a tin layer, a tin alloy layer, a copper alloy layer, a niobium layer, a niobium alloy layer, a titanium layer, a titanium alloy layer, a molybdenum layer, a molybdenum alloy layer, a tungsten layer, a tungsten alloy layer, a palladium alloy layer, and a platinum alloy layer.

A thickness of the intermediate layer is preferably in a range from 0.01 µm to 1 µm, more preferably in a range from 0.02 µm to 1 µm, further preferably in a range from 0.03 µm to 0.7 µm.

### Shape, Interval L, and Diameter D of Metal Wires

The metal wires 22 may each be a linear body of a single metal wire 22 or a linear body of a plurality of twisted metal wires 22.

In the quasi-sheet structure 20, an interval L between the metal wires 22 is preferably in a range from 0.3 mm to 12.0 mm, more preferably in a range from 0.5 mm to 10.0 mm, further preferably in a range from 0.8 mm to 7.0 mm.

With the interval L between the metal wires 22 being in a range from 0.3 mm to 12.0 mm, the resistance relative to the electrodes caused when the sheet-shaped heat-generating element 10 is attached to the electrodes and caused to generate heat is likely to decrease. This facilitates attachment of the electrodes to the sheet-shaped heat-generating element 10, so that the abnormal heat generation of the electrode portions is likely to be reduced.

Further, with the interval L between the metal wires 22 being within the above range, in a case where the sheet-shaped heat-generating element 10 includes the adhesive agent layer 30 and a constituent member of the sheet-shaped heat-generating element is to be bonded to the adhesive agent layer or the sheet-shaped heat-generating element is to be bonded to an adherend via the adhesive agent layer, an exposed area of the adhesive agent layer 30 exposed between the metal wires 22 can be ensured to prevent the metal wires 22 from disturbing the bonding between the adhesive agent layer 30, which is exposed through the quasi-sheet structure 20, and the constituent member or the adherend.

Further, with the interval L between the metal wires 22 being within the above range, the metal wires 22 are dense to some degree, allowing for keeping the resistance of the quasi-sheet structure 20 low to improve a function of the sheet-shaped heat-generating element 10 such as equalization of distribution of temperature rise.

For the interval L between the metal wires 22, an interval between adjacent two of the metal wires 22 is measured by observing the metal wires 22 of the quasi-sheet structure 20 with a digital microscope (manufactured by KEYENCE CORPORATION, Product No. VHX-6000).

It should be noted that the interval L between adjacent two of the metal wires 22 is a length along a direction in which the metal wires 22 are arranged, that is, a length between facing portions of the two metal wires 22 (see Fig. 2).

In a case where the metal wires 22 are arranged at irregular intervals, the interval L is an average value of intervals between all the adjacent ones of the metal wires 22. However, in terms of controllability of the value of the interval L, in the quasi-sheet structure 20, the metal wires 22 are preferably arranged substantially at regular intervals, more preferably arranged at regular intervals.

In a case where the metal wires 22 are each in a wavy shape as described later, the metal wires 22 are partially closer to each other than the interval L due to the curvature or bend of the metal wires 22. Accordingly, it is sometimes preferable that the interval L be wider. In such a case, the interval L between the metal wires 22 is preferably in a range from 1 mm to 30 mm, more preferably in a range from 2 mm to 20 mm.

A shape of a cross section of each of the metal wires 22 is not limited and may be a polygonal shape, a flat shape, an oval shape, a circular shape, or the like. The shape of the cross section of each of the metal wires 22 is preferably an oval shape or a circular shape in terms of, for instance, affinity to the adhesive agent layer 30.

In a case where the cross section of each of the metal wires 22 is in a circular shape, the diameter D of each of the metal wires 22 is preferably in a range from 6 µm to 75 µm, more preferably in a range from 9 µm to 60 µm, further preferably in a range from 13 µm to 50 µm in terms of a reduction in a rise in sheet resistance, in terms of an improvement in heat generation efficiency and anti-insulation/breakage properties, in terms of making the metal wires 22 visually and tactually less noticeable, and in terms of making a beam likely to evenly pass through the sheet-shaped heat-generating element 10. Although such thinned metal wires are significantly likely to cause a rise in the resistance of the connection between the metal wires 22 and the electrodes and abnormal heat generation of the electrode portions described above, in the exemplary embodiment, such abnormal heat generation of the electrode portions is reduced. In addition, the diameter D of the metal wires 22 of 13 µm or more provides an effect in making the metal wire 22 less breakable as a result of an increase in a strength thereof. On the other hand, in a case where the diameter D of the metal wires 22 is 13 µm or more, a linear resistance of the metal wires 22 is likely to decrease. However, in the exemplary embodiment, the volume resistivity of the first metal is 3.0 × 10⁻⁶ Ω·cm or more, which makes it possible to keep the linear resistance of the metal wires 22 high.

In a case where the cross section of each of the metal wires 22 is in an oval shape, it is preferable that a long diameter be in a range similar to that of the above diameter D.

The diameter D of the metal wires 22 is an average value of results of measuring the diameter D of the metal wires 22 at five spots selected at random by observing the cross section of each of the metal wires 22 of the quasi-sheet structure 20 with a digital microscope (manufactured by KEYENCE CORPORATION, Product No. VHX-6000).

### Adhesive Agent Layer

The adhesive agent layer 30 is a layer containing an adhesive agent. It should be noted that the adhesive agent layer 30 is a layer that is provided as required.

It is preferable that the quasi-sheet structure 20 be in contact with the adhesive agent layer 30.

With the adhesive agent layer 30 stacked on the second surface 20B of the quasi-sheet structure 20 in the sheet-shaped heat-generating element 10, it is easy to stick the sheet-shaped heat-generating element 10 to an adherend by virtue of the adhesive agent layer 30.

On the other hand, a component contained in the adhesive agent layer 30 makes an oxide film likely to be generated on the metal wires 22, which would increase, when the sheet-shaped heat-generating element 10 is attached to the electrodes, a possibility of a rise in the resistance of the connection between the metal wires 22 and the electrodes. However, the metal wires 22 of the exemplary embodiment, each of which is provided with the metal coating film 222 around the core 221 in advance, enable a reduction in the generation of an oxide film with time elapsed after production.

The sheet-shaped heat-generating element 10 can be bonded to an adherend with the first surface 20A facing the adherend. In this case, the first adhesive surface 30A of the adhesive agent layer 30 exposed through the quasi-sheet structure 20 in the sheet-shaped heat-generating element 10 makes it easy to bond the sheet-shaped heat-generating element 10 to the adherend as described above. Further, the sheet-shaped heat-generating element 10 may be bonded to an adherend with the second adhesive surface 30B facing the adherend.

It is preferable that the adhesive agent layer 30 be curable. With the adhesive agent layer 30 cured, a hardness sufficient for protecting the quasi-sheet structure 20 is provided to the adhesive agent layer 30. In addition, the cured adhesive agent layer 30 is improved in impact resistance, so that deformation of the cured adhesive agent layer 30 due to impact can be reduced.

It is preferable that the adhesive agent layer 30 be curable with an energy ray such as an ultraviolet ray, a visible energy ray, an infrared ray, or an electron ray so that the adhesive agent layer 30 can easily be cured in a short time. It should be noted that "curing with an energy ray" includes thermal curing by energy-ray heating.

Conditions for the energy-ray curing are different depending on an energy ray used. For instance, in a case where the adhesive agent layer 30 is to be cured by ultraviolet irradiation, an irradiation amount of the ultraviolet ray is preferably in a range from 10 mJ/cm² to 3,000 mJ/cm² and an irradiation time is preferably in a range from 1 second to 180 seconds.

While examples of the adhesive agent in the adhesive agent layer 30 include a so-called heat-sealing adhesive agent that is to be bonded by heat and an adhesive agent that exhibits stickiness when wetted, it is preferable that the adhesive agent layer 30 be a sticky agent layer formed of a sticky agent (a pressure-sensitive adhesive agent) in terms of easiness in application. The sticky agent in the sticky agent layer is not limited. Examples of the sticky agent include an acrylic sticky agent, a urethane sticky agent, a rubber sticky agent, a polyester sticky agent, a silicone sticky agent, and a polyvinyl ether sticky agent. Among the above, the sticky agent is preferably at least one selected from the group consisting of an acrylic sticky agent, a urethane sticky agent, and a rubber sticky agent, more preferably an acrylic sticky agent.

Examples of an acrylic sticky agent include a polymer including a constituent unit derived from alkyl (meth)acrylate having a linear alkyl group or a branched alkyl group (i.e., a polymer with at least alkyl (meth)acrylate polymerized) and an acrylic polymer including a constituent unit derived from a (meth)acrylate with a ring structure (i.e., a polymer with at least a (meth)acrylate with a ring structure polymerized). Here, the "(meth)acrylate" is used as a term referring to both "acrylate" and "methacrylate" and the same applies to other similar terms.

In a case where the acrylic polymer is a copolymer, a manner of copolymerization is not limited. The acrylic copolymer may be any one of a block copolymer, a random copolymer, and a graft copolymer.

Among the above, an acrylic copolymer including a constituent unit (a1) derived from alkyl (meth)acrylate (a1') having a chain alkyl group having 1 to 20 carbon atoms (hereinafter, also referred to as a "monomer component (a1')") and a constituent unit (a2) derived from a functional-group-containing monomer (a2') (hereinafter, also referred to as a "monomer component (a2')") is preferable as the acrylic sticky agent.

It should be noted that the acrylic copolymer may further include a constituent unit (a3) derived from a monomer component (a3') other than the monomer component (a1') and the monomer component (a2').

In terms of an improvement in sticky properties, the number of the carbon atoms of the chain alkyl group of the monomer component (a1') is preferably in a range from 1 to 12, more preferably in a range from 4 to 8, further preferably in a range from 4 to 6. Examples of the monomer component (a1') include methyl (meth)acrylate, ethyl (meth)acrylate, propyl (meth)acrylate, n-butyl (meth)acrylate, 2-ethylhexyl (meth)acrylate, lauryl (meth)acrylate, tridecyl (meth)acrylate, and stearyl (meth)acrylate. Among these monomer components (a1'), butyl (meth)acrylate and 2-ethylhexyl (meth)acrylate are preferable and butyl (meth)acrylate is more preferable.

The content of the constituent unit (a1) relative to all the constituent units of the acrylic copolymer (100 mass%) is preferably in a range from 50 mass% to 99.5 mass%, more preferably in a range from 55 mass% to 99 mass%, further preferably in a range from 60 mass% to 97 mass%, particularly preferably in a range from 65 mass% to 95 mass%.

Examples of the monomer component (a2') include a hydroxy-group-containing monomer, a carboxy-group-containing monomer, an epoxy-group-containing monomer, an amino-group-containing monomer, a cyano-group-containing monomer, a keto-group-containing monomer, and an alkoxysilyl-group-containing monomer. Among these monomer components (a2'), a hydroxy-group-containing monomer and a carboxy-group-containing monomer are preferable.

Examples of a hydroxy-group-containing monomer include 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate, among which 2-hydroxyethyl (meth)acrylate is preferable.

Examples of a carboxy-group-containing monomer include a (meth)acrylic acid, a maleic acid, a fumaric acid, and an itaconic acid, among which a (meth)acrylic acid is preferable.

Examples of an epoxy-group-containing monomer include glycidyl (meth)acrylate.

Examples of an amino-group-containing monomer include diaminoethyl (meth)acrylate.

Examples of a cyano-group-containing monomer include acrylonitrile.

The content of the constituent unit (a2) relative to all the constituent units of the acrylic copolymer (100 mass%) is preferably in a range from 0.1 mass% to 50 mass%, more preferably in a range from 0.5 mass% to 40 mass%, further preferably in a range from 1.0 mass% to 30 mass%, particularly preferably in a range from 1.5 mass% to 20 mass%.

Examples of the monomer component (a3') include a (meth)acrylate having a ring structure (e.g., cyclohexyl (meth)acrylate, benzil (meth)acrylate, isobornyl (meth)acrylate, dicyclopentanyl (meth)acrylate, dicyclopentenyl (meth)acrylate, dicyclopentenyloxyethyl (meth)acrylate, imide (meth)acrylate, and acryloylmorpholine), vinyl acetate, and styrene.

The content of the constituent unit (a3) relative to all the constituent units of the acrylic copolymer (100 mass%) is preferably in a range from 0 mass% to 40 mass%, more preferably in a range from 0 mass% to 30 mass%, further preferably in a range from 0 mass% to 25 mass%, particularly preferably in a range from 0 mass% to 20 mass%.

It should be noted that the above monomer components (a1') may be used alone or two or more thereof may be used in combination, the above monomer components (a2') may be used alone or two or more thereof may be used in combination, and the above monomer components (a3') may be used alone or two or more thereof may be used in combination.

The acrylic copolymer may be cross-linked by a cross-linker. Examples of the cross-linker include a known epoxy cross-linker, isocyanate cross-linker, aziridine cross-linker, and metal chelate cross-linker. In cross-linking the acrylic copolymer, a functional group derived from the monomer component (a2') can be used as a crosslink point to react with the cross-linker.

The adhesive agent layer 30 may further contain an energy-ray curable component in addition to the above sticky agent.

Examples of the energy-ray curable component include, in a case where the energy ray is, for instance, an ultraviolet ray, a compound having two or more UV-polymerizable functional groups in one molecule, such as a multifunctional (meth)acrylate compound.

The energy-ray curable component may be used alone or a mixture of two or more thereof may be used.

Further, in a case where the acrylic sticky agent is used as the sticky agent, a compound having a functional group reactive with the functional group derived from the monomer component (a2') of the acrylic copolymer and an energy-ray polymerizable functional group in one molecule as the energy-ray curable component. Reaction between the functional group of the compound and the functional group derived from the monomer component (a2') of the acrylic copolymer enables a side chain of the acrylic copolymer to be polymerizable by energy ray irradiation. Even in a case where the sticky agent is not the acrylic sticky agent, a component with an energy-ray polymerizable side chain may likewise be used as a copolymer component other than the copolymer that serves as the sticky agent.

In a case where the adhesive agent layer 30 is curable with an energy ray, it is preferable that the adhesive agent layer 30 contain a photopolymerization initiator. The photopolymerization initiator enables increasing a speed at which the adhesive agent layer 30 is cured by energy ray irradiation.

The adhesive agent layer 30 may contain an inorganic filler. With the inorganic filler contained, a hardness of the cured adhesive agent layer 30 can be further improved. In addition, a heat conductivity of the adhesive agent layer 30 is improved. Further, in a case where an adherend contains glass as a main component, linear expansion coefficients of the sheet-shaped heat-generating element 10 and the adherend can be closer to each other, thereby improving reliability of a device provided by sticking the sheet-shaped heat-generating element 10 to the adherend and, as required, curing the sheet-shaped heat-generating element 10.

Examples of the inorganic filler include inorganic powder (e.g., powders of silica, alumina, talc, calcium carbonate, titanium white, colcothar, silicon carbide, and boron nitride), beads of spheroidized inorganic powder, single crystal fiber, and glass fiber. Among the above, a silica filler and an alumina filler are preferable as the inorganic filler. The inorganic fillers may be used alone or two or more thereof may be used in combination.

Other components may be contained in the adhesive agent layer 30. Examples of other components include known additives such as an organic solvent, a flame retardant, a tackifier, an ultraviolet absorber, an antioxidant, a preservative, an antifungal agent, a plasticizer, a defoamer, and a wettability modifier.

A thickness of the adhesive agent layer 30 is determined as desired in accordance with an intended use of the sheet-shaped heat-generating element 10. For instance, in terms of adhesiveness, the thickness of the adhesive agent layer 30 is preferably in a range from 3 µm to 150 µm, more preferably in a range from 5 µm to 100 µm.

### Producing Method of Sheet

A producing method of the sheet-shaped heat-generating element 10 according to the exemplary embodiment is not limited. The sheet-shaped heat-generating element 10 is produced through, for instance, the following process.

First, the cores 221 containing the first metal as a main component are prepared and the metal coating film 222 containing the second metal as a main component is formed on the exterior side of each of the cores 221. The metal wires 22 are thus obtained. It should be noted that the metal wires 22 may be a commercial product.

The metal coating film 222 can be formed by, for instance, vapor deposition, ion plating, sputtering, or wet plating of a metal itself or a metal alloy on the surface of the core 221. It should be noted that in a case where the intermediate layer is provided in each of the metal wires 22, the intermediate layer may be formed on the surface of the core 221 by a method similar to the method of forming the metal coating film 222.

Subsequently, a composition for forming the adhesive agent layer 30 is applied on a release sheet to form a coating film. Subsequently, the coating film is dried to produce the adhesive agent layer 30. Subsequently, the metal wires 22 are disposed on the first adhesive surface 30A of the adhesive agent layer 30 while being arranged, thereby forming the quasi-sheet structure 20. For instance, while a drum member is turned in a state where the adhesive agent layer 30 attached with the release sheet is disposed on an outer circumferential surface of the drum member, the metal wires 22 are helically wound on the first adhesive surface 30A of the adhesive agent layer 30. A bundle of the helically wound metal wires 22 is then cut along an axial direction of the drum member. The quasi-sheet structure 20 is thus formed with the plurality of metal wires 22 disposed on the first adhesive surface 30A of the adhesive agent layer 30. Then, the adhesive agent layer 30 attached with the release sheet, on which the quasi-sheet structure 20 is formed, is taken off the drum member. After this process, the release sheet is removed from the adhesive agent layer 30, thus providing the sheet-shaped heat-generating element 10. Alternatively, the release sheet may be left as a constituent member of the sheet-shaped heat-generating element 10. According to this method, the interval L between adjacent ones of the metal wires 22 of the quasi-sheet structure 20 is easily adjusted by, for instance, moving a feeder of the metal wires 22 along a direction parallel with an axis of the drum member while turning the drum member.

It should be noted that after the quasi-sheet structure 20 is formed by arranging the metal wires 22, the second surface 20B of the obtained quasi-sheet structure 20 may be stuck onto the first adhesive surface 30A of the adhesive agent layer 30 to produce the sheet-shaped heat-generating element 10.

### Properties of Sheet-Shaped Heat-Generating Element

A sheet resistance (Ω/□ = Ω/sq.) of the sheet-shaped heat-generating element 10 according to the exemplary embodiment is preferably 800 Ω/□ or less, more preferably in a range from 0.01 Ω/□ to 500 Ω/□, further preferably in a range from 0.05 Ω/□ to 300 Ω/□. In terms of a reduction in a voltage to be applied, it is preferable that the sheet resistance of the sheet-shaped heat-generating element 10 be relatively low. At the sheet resistance of the sheet-shaped heat-generating element 10 of 800 Ω/□ or less, the voltage to be applied is easily reduced.

The sheet resistance is measured by the following method. First, to improve electrical connection, a silver paste is applied to both ends of the quasi-sheet structure 20. Subsequently, the sheet-shaped heat-generating element 10 is stuck to a glass substrate with copper tapes stuck on both ends thereof such that the silver paste and the copper tapes are in contact with each other and then resistance is measured with an electric tester to calculate the sheet resistance.

### Method of Using Sheet-Shaped Heat-Generating Element

The sheet-shaped heat-generating element 10 according to the exemplary embodiment, which is a planar heat-generating element, is suitably usable for planar heat generation.

The sheet-shaped heat-generating element 10 according to the exemplary embodiment is attached to electrodes for supplying power to the metal wires 22 in use. Examples of a technique of electrically connecting the metal wires 22 and the electrodes include the following connecting means (1) to (6).
Connecting means (1): The metal wires 22 and the electrodes are bonded using a conductive adhesive agent.
Connecting means (2): Connection via a composition in which metal particles are dispersed in a resin (e.g., silver paste) or a film formed of a composition in which metal particles are dispersed in a resin.
Connecting means (3): The metal wires 22 and the electrodes are crimped using a metal plate to maintain the contact between them.
Connecting means (4): A contact portion between the metal wires 22 and the electrodes is sandwiched between a male part and a female part of a snap fastener to maintain the contact between them.
Connecting means (5): A resin film that is meltable by an electromagnetic wave or an ultrasonic wave is provided around the contact portion between the metal wires 22 and the electrodes and the resin film is melted by electromagnetic wave application or ultrasonic wave application and cured to maintain the contact between the metal wires 22 and the electrodes.
Connecting means (6): The contact portion between the metal wires 22 and the electrodes is riveted to maintain the contact between them.

It is preferable that the metal wires 22 be in contact with the electrodes in use for the following reasons.

As the method of reducing the resistance of the connection between the metal wires 22 and the electrodes when the sheet-shaped heat-generating element 10 is attached to the electrodes and caused to generate heat, a method where the sheet-shaped heat-generating element 10 is attached to the electrodes with a conductive material such as a silver paste is also applicable.

However, in a case where the sheet-shaped heat-generating element 10 includes a base that is relatively weak to heat, the use of a thermosetting conductive material such as a silver paste is usually likely to cause damage to the base due to heat. Among bases, a stretchable base, which is useful in a case where a conductive sheet is stuck along a curved surface while being stretched, tends to be weak to heat.

Further, in a case where the sheet-shaped heat-generating element 10 includes the adhesive agent layer 30 as shown in Fig. 1, the contact between the metal wires 22 and the electrodes can be maintained by virtue of bonding by the adhesive agent layer 30. Accordingly, it is preferable that the metal wires 22 and the electrodes be in direct contact with each other without forming an extra silver paste, a conductive adhesive agent, or the like onto the electrodes also in terms of productivity. As a result of studies by the inventors, it has been found that in a case where a metal wire and electrodes are electrically connected to each other by being brought in contact with each other, a rise in contact resistance due to a failure in contact between the metal wire and the electrodes is likely to cause abnormal heat generation. In the sheet-shaped heat-generating element 10 according to the exemplary embodiment, the second metal of the metal coating film 222 has the reference electrode potential E_{M2} in the above range, which makes it possible to prevent occurrence of abnormal heat generation even in such a case.
In a heat generator including a typical metal wire, such a method is not applied to connect the metal wire and the electrodes, so that a rise in the resistance between the metal wire and the electrodes is not of concern and thus the wire is not to be subjected to metal coating such as plating to reduce the contact resistance between the wire and the electrodes. For instance, in Example of Patent Literature 2, electrodes and a wire are electrically connected via a silver paste for the purpose of evaluation of heat generation efficiency. Thus, no rise in the contact resistance between the metal wire and the electrodes occurs and the wire used in Example of Patent Literature 2 is provided with no metal coating film.

For instance, known electrode materials such as Al, Ag, Au, Cu, Ni, Pt and Cr, and alloys thereof are usable as a material of the electrodes to which the sheet-shaped heat-generating element 10 is to be attached. A size, number, location, etc. of electrodes may be selected as required for the intended use. It is preferable that the electrodes to which the sheet-shaped heat-generating element 10 is to be attached be in a belt-shape so that the plurality of metal wires 22 can be attached thereto.

In use, the sheet-shaped heat-generating element 10 is stuck to, for instance, an adherend that may generate heat in use. Examples of a function of an article obtained by using the sheet-shaped heat-generating element 10 for such an adherend include a defogger and a deicer. In this case, examples of the adherend include a mirror for a bathroom, etc., a window for a transportation device (a passenger vehicle, a train, a ship, an airplane, etc.), a window for a building, an eyewear, a lighting surface of a traffic light, and a sign. In addition, a surface of a molded article used for an enclosure of an electrical product, a vehicle interior part, a building material/interior material, or the like may be subjected to a three dimensional molding method such as TOM (Three dimension Overlay Method) molding, film insert molding, or vacuum molding so that the molded article is coated with the sheet-shaped heat-generating element 10 to serve as a heat-generating element.

In a case where the adhesive agent layer 30 is curable, the adhesive agent layer 30 is cured after the sheet-shaped heat-generating element 10 is stuck to an adherend. In sticking the sheet-shaped heat-generating element 10 to the adherend, a quasi-sheet structure 20 side of the sheet-shaped heat-generating element 10 may be stuck to the adherend (i.e., stuck to the adherend with the quasi-sheet structure 20 in between the first adhesive surface 30A of the adhesive agent layer 30 and the adherend) or the second adhesive surface 30B of the sheet-shaped heat-generating element 10 may be stuck to the adherend.

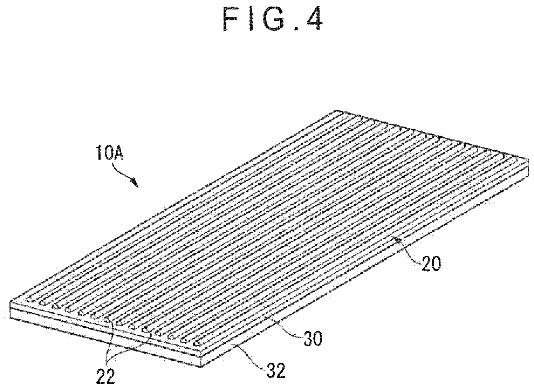

It should be noted that in a case where a base 32 (see Fig. 4) is not present on a second adhesive surface 30B side of the adhesive agent layer 30, it is preferable that the quasi-sheet structure 20 side of the sheet-shaped heat-generating element10 be stuck to the adherend. This is because the quasi-sheet structure 20 is sufficiently protected by both the adherend and the adhesive agent layer 30. This improves the impact resistance of the sheet-shaped heat-generating element 10, so that the sheet-shaped heat-generating element 10 is supposed to be suitable for practical use. In addition, the adhesive agent layer 30 contributes to preventing electrical shock when heat is generated (when a current is carried). In this case, as long as the sheet-shaped heat-generating element 10 includes a later-described release layer 34 on the second surface 20B of the adhesive agent layer 30, the sheet-shaped heat-generating element 10 exhibits improved shape retainability until the sheet-shaped heat-generating element 10 is stuck to the adherend. The release layer 34 is peeled and removed after the sheet-shaped heat-generating element 10 is stuck to the adherend. In a case where the adhesive agent layer 30 is to be cured, the release layer 34 may be removed either before or after the curing.

### Second Exemplary Embodiment

Next, description will be made on a second exemplary embodiment of the invention on the basis of the attached drawing.

It should be noted that this exemplary embodiment is similar in configuration to the first exemplary embodiment except that a sheet-shaped heat-generating element 10A is used in place of the sheet-shaped heat-generating element 10. Accordingly, the sheet-shaped heat-generating element 10A will be described and description of the other components will be omitted.

The sheet-shaped heat-generating element 10 A according to this exemplary embodiment includes the base 32 stacked on the second adhesive surface 30B of the adhesive agent layer 30 as shown in Fig. 4.

Examples of the base 32 include paper, non-woven fabric, woven fabric, a thermoplastic resin film, a cured film of a curable resin, metallic foil, and glass film. Examples of the thermoplastic resin film include polyester, polycarbonate, polyimide, polyolefin, polyurethane, and acrylic resin films. Further, it is preferable that the base 32 exhibit stretchability in terms of facilitation of sticking onto a curved surface of an adherend.

It should be noted that a surface of the base 32 not facing the adhesive agent layer 30 (a surface exposed through the sheet-shaped heat-generating element 10A) may be subjected to, for instance, a hard coating treatment with an ultraviolet curable resin or the like to enhance protectiveness for the sheet-shaped heat-generating element 10A (the quasi-sheet structure 20).

### Third Exemplary Embodiment

Next, description will be made on a third exemplary embodiment of the invention on the basis of the attached drawing.

It should be noted that this exemplary embodiment is different in that the sheet-shaped heat-generating element 10 according to the first exemplary embodiment further includes at least one release layer 34. Since this exemplary embodiment is similar in configuration to the first exemplary embodiment except the above, the release layer 34 will be described and description of the other components will be omitted.

A sheet-shaped heat-generating element 10B according to this exemplary embodiment has, for instance, the release layer 34 stacked on at least one of the first surface 20A of the quasi-sheet structure 20 or the second adhesive surface 30B of the adhesive agent layer 30.

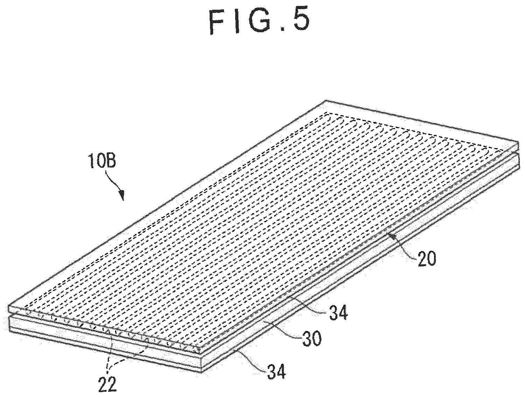

It should be noted that Fig. 5 shows the sheet-shaped heat-generating element 10B including the release layer 34 stacked on both the first surface 20A of the quasi-sheet structure 20 and the second adhesive surface 30B of the adhesive agent layer 30.

The release layer 34 is not limited. For instance, it is preferable that the release layer 34 include a release base and a release agent layer formed by applying a release agent onto the release base in terms of handleability. Further, the release layer 34 may include the release agent layer only on one surface of the release base or include the release agent layers on both surfaces of the release base.

Examples of the release base include a paper base, a laminated paper including a paper base or the like with a thermoplastic resin (e.g., polyethylene) laminated thereon, and a plastic film. Examples of the paper base include glassine paper, coated paper, and cast-coated paper. Examples of the plastic film include a polyester film (e.g., polyethylene terephthalate, polybutylene terephthalate, and polyethylene naphthalate) and a polyolefin film (e.g., polypropylene and polyethylene). Examples of the release agent include an olefin resin, a rubber elastomer (e.g., a butadiene resin and an isoprene resin), a long-chain alkyl resin, an alkyd resin, a fluorine resin, and a silicone resin.

A thickness of the release layer 34 is not limited. The thickness of the release layer 34 is preferably in a range from 20 µm to 200 µm, more preferably in a range from 25 µm to 150 µm.

A thickness of the release agent layer of the release layer 34 is not limited. In a case where the release agent layer is formed by application of a solution containing the release agent, the thickness of the release agent layer is preferably in a range from 0.01 µm to 2.0 µm, more preferably in a range from 0.03 µm to 1.0 µm.

In a case where a plastic film is used as the release base, a thickness of the plastic film is preferably in a range from 3 µm to 150 µm, more preferably in a range from 5 µm to 100 µm.

### Fourth Exemplary Embodiment

Next, description will be made on a fourth exemplary embodiment of the invention on the basis of the attached drawing.

It should be noted that this exemplary embodiment is different in that the quasi-sheet structure 20 of the sheet-shaped heat-generating element 10 according to the first exemplary embodiment is replaced with a quasi-sheet structure 20C. Since this exemplary embodiment is similar in configuration to the first exemplary embodiment except the above, the quasi-sheet structure 20C will be described and description of the other components will be omitted.

A sheet-shaped heat-generating element 10C according to this exemplary embodiment includes the quasi-sheet structure 20C, a metal wire 22C of which may be periodically curved or bent. Specifically, the metal wire 22C may be in a wavy shape such as a sinusoidal wave, a rectangular wave, a triangular wave, and a sawtooth wave. In other words, the quasi-sheet structure 20C may have a structure in which, for instance, a plurality of metal wires 22C in a wavy shape extending to one side are arranged in a direction perpendicular to a direction of the extension of the metal wires 22C at regular intervals.

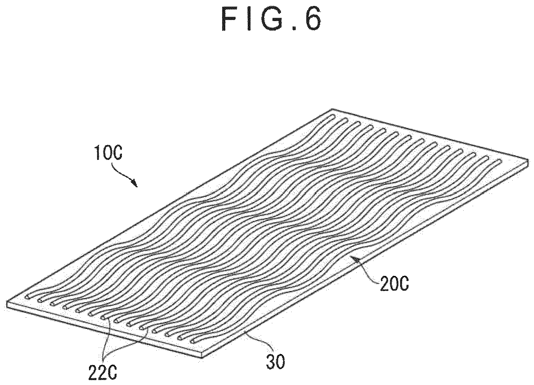

It should be noted that Fig. 6 shows the sheet-shaped heat-generating element 10C including the quasi-sheet structure 20C in which the plurality of metal wires 22C in a wavy shape extending to one side are arranged in the direction perpendicular to the direction of the extension of the metal wires 22C at regular intervals.

### Fifth Exemplary Embodiment

Next, description will be made on a fifth exemplary embodiment of the invention on the basis of the attached drawings.

It should be noted that description will be made on an implementation in which a sheet-shaped heat-generating element is used as a heat-generating element of a heat generator in this exemplary embodiment. A heat generator 50 according to this exemplary embodiment includes any one of the sheet-shaped heat-generating element s of the first exemplary embodiment to the fourth exemplary embodiment (a sheet-shaped heat-generating element 10D according to this exemplary embodiment).

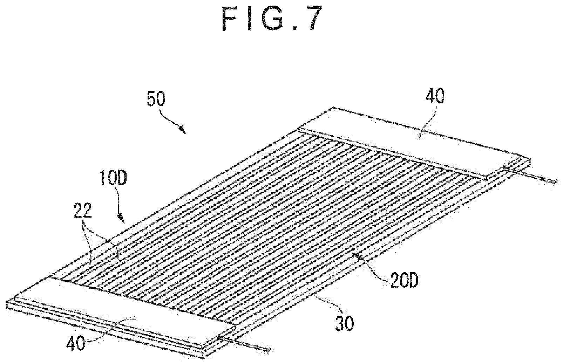

The heat generator 50 according to this exemplary embodiment includes the sheet-shaped heat-generating element 10D according to this exemplary embodiment and electrodes 40 configured to supply power to the sheet-shaped heat-generating element 10D (a quasi-sheet structure 20D according to this exemplary embodiment) as shown in Fig. 7. The electrodes 40 are electrically connected to an end of the quasi-sheet structure 20D of the sheet-shaped heat-generating element 10D. The electrodes 40 and the quasi-sheet structure 20D are joined by bringing the electrodes 40 and the metal wires 22 of the quasi-sheet structure 20D into contact with each other and the sheet-shaped heat-generating element 10D is fixed to the electrodes by virtue of the adhesive agent layer 30. According to this exemplary embodiment, it is possible to easily fix the sheet-shaped heat-generating element 10D to the electrodes 40 by virtue of the adhesive agent layer 30 and, simultaneously, electrically connect the metal wires 22 and the electrodes 40 to each other. As described above, when a metal wire and electrodes are brought into contact with each other, the metal wire and the electrodes are usually electrically connected to each other. In this case, abnormal heat generation is likely to occur due to a failure in contact between the metal wire and the electrodes. In the heat generator 50 according to this exemplary embodiment, the reference electrode potential E_{M2} of the second metal forming the metal coating film of the metal wire 22 is +0.34 V or more, which prevents the occurrence of abnormal heat generation.

It should be noted that the electrodes 40 are not limited and known electrodes are usable.

Next, a preferable implementation of the fifth exemplary embodiment will be described.

It is preferable that the heat generator 50 according to the fifth exemplary embodiment be a heat generator including electrodes 40A in place of the electrodes 40.

Specifically, in the heat generator including the electrodes 40A, it is preferable that at least a part of the plurality of metal wires 22 of the sheet-shaped heat-generating element 10D be arranged while connected to the electrodes 40A, a surface of the electrodes 40A connected to the metal wires 22 be formed of a third metal, and a reference electrode potential (hereinafter, also referred to as a "reference electrode potential E_{M3}") of the third metal be +0.5 V or more.

At the reference electrode potential E_{M3} of the third metal of +0.5 V or more, corrosion resistance of the electrodes is improved. Consequently, it is possible to prevent a rise in contact resistance between the electrodes and the metal wires resulting from corrosion of the electrodes due to an influence of temperature and humidity in storage and in use. This enables reducing an increase in heat generation of the electrode portions during the use of the heat generator due to the influence of the temperature and the humidity.

Therefore, in the heat generator including the electrodes 40A, since the reference electrode potential E_{M2} of the second metal forming the metal coating film of the metal wires 22 is +0.34 V or more and the reference electrode potential of the surface of the electrodes 40A connected to the metal wires 22 is +0.5 V or more, the resistance of the connection between the metal wires 22 and the electrodes 40A is further reduced to further prevent abnormal heat generation of the electrode portions.

The electrodes 40A are not limited at least as long as the surface of the electrodes 40A connected to the metal wires 22 is formed of the third metal.

### Third Metal

The reference electrode potential E_{M3} of the third metal is +0.5 V or more, preferably +0.7 V or more, more preferably +0.9 V or more. An upper limit of the reference electrode potential E_{M3} of the third metal is preferably +2.0 V or less, more preferably +1.6 V or less.

The reference electrode potential E_{M3} of the third metal is a material-inherent value and a known value. It should be noted that the third metal is a concept including alloy.

The third metal is not limited as long as the reference electrode potential E_{M3} is +0.5 V or more. Examples of the third metal include gold, platinum, palladium, silver and an alloy. Examples of the alloy include an alloy containing at least two metals selected from the group consisting of gold, platinum, palladium, and silver.

The third metal is preferably at least one selected from the group consisting of gold, platinum and palladium, and the alloy (the alloy containing at least two metals selected from the group consisting of gold, platinum, palladium, and silver). The third metal may be the same as or different from the second metal.

Examples of an implementation of the electrodes 40A include 1) an implementation in which the electrodes are entirely formed of the third metal, 2) an implementation in which the electrodes each include an electrode base body and a coating layer, the coating layer being provided at least on a surface of the electrode base body connected to the metal wires 22, the coating layer being formed of the third metal, and 3) an implementation in which a buffer layer is further provided between the electrode base body and the coating layer in the implementation of 2).

The electrode base body is not limited as long as a material thereof allows for forming the coating layer formed of the third metal on the surface. known electrodes are usable as the electrode base body. Examples of the coating layer include a coating layer formed by a known method such as electroplating, electroless plating, sputtering, vapor deposition, or spin coating. A thickness of the coating layer is preferably in a range from 0.01 µm to 3 µm, more preferably in a range from 0.02 µm to 1 µm, further preferably in a range from 0.03 µm to 0.7 µm.

Examples of the buffer layer include layers of metals different from the third metal, such as a nickel layer, a nickel alloy layer, a tin layer, a tin alloy layer, a copper alloy layer, a niobium layer, a niobium alloy layer, a titanium layer, a titanium alloy layer, a molybdenum layer, a molybdenum alloy layer, a tungsten layer, a tungsten alloy layer, a palladium alloy layer, and a platinum alloy layer. A thickness of the buffer layer is preferably in a range from 0.01 µm to 1 µm, more preferably in a range from 0.02 µm to 1 µm, further preferably in a range from 0.03 µm to 0.7 µm.

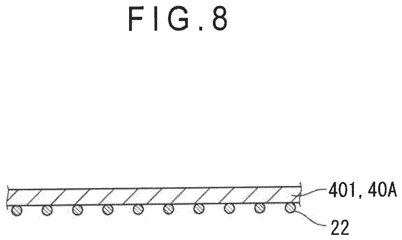

Examples of a preferable implementation of the electrodes 40A include electrodes shown in Fig. 8 to Fig. 10.

Figs. 8 to 10 are each a cross-sectional view of an implementation of contact between the electrodes and the metal wires. It should be noted that the electrodes shown in Fig. 8 to Fig. 10 correspond to the implementations of the electrodes of 1) to 3), respectively.

Electrodes 401 shown in Fig. 8, which are entirely formed of the third metal, correspond to the implementation of the electrodes of 1). Fig. 8 shows that the electrodes 401 formed of the third metal and the metal coating film of each of the metal wires 22 are in contact with each other.

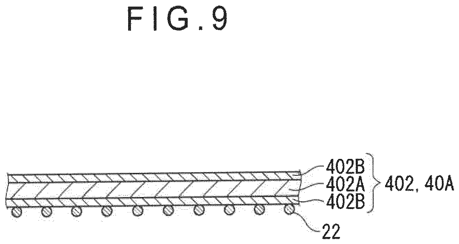

Electrodes 402 shown in Fig. 9, which each include an electrode base body 402A and a coating layer 402B formed on a surface of the electrode base body 402A, correspond to the implementation of the electrodes of 2). Fig. 9 shows that the coating layer 402B formed of the third metal and the metal coating film of each of the metal wires 22 are in contact with each other.

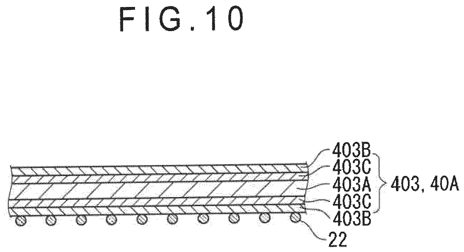

electrodes 403 shown in Fig. 10, which each include an electrode base body 403A, a buffer layer 403C formed on a surface of the electrode base body 403A, and a coating layer 403B formed on a surface of the buffer layer 403C, corresponds to the implementation of the electrodes of 3). Fig. 10 shows that the coating layer 403B formed of the third metal and the metal coating film of each of the metal wires 22 are in contact with each other.

The electrodes 40 or the electrodes 40A used in the fifth exemplary embodiment are usually connected to the metal wires 22 by connecting means.

The connecting means is not limited but examples thereof include, in addition to the connection using the adhesive agent layer as described above, soldering, welding, and pressing using a crimping tool (e.g., a clip and a vise).

### Other Exemplary Embodiments

The scope of the invention is not limited to the above exemplary embodiments, and modifications, improvements, etc. are included within the scope of the invention as long as the modification, improvements, etc. are compatible with an object of the invention.

For instance, although the quasi-sheet structure is in the form of a single layer in the above exemplary embodiments, the scope of the invention is not limited thereto. For instance, the sheet-shaped heat-generating element may be in the form of a sheet including a plurality of quasi-sheet structures arranged in a sheet-plane direction (a direction along a sheet surface). The plurality of quasi-sheet structures may be arranged with the respective metal wires being in parallel with each other or intersecting each other in a plan view of the sheet-shaped heat-generating element.

The sheet-shaped heat-generating element s according to the first exemplary embodiment to the fourth exemplary embodiment may each include another adhesive agent layer on the first surface 20A (see Fig. 2) of the quasi-sheet structure. In this case, it is preferable that a pressure be applied to the sheet-shaped heat-generating element at the same time when or after the sheet-shaped heat-generating element is stuck to an adherend to sink the metal wires into the other adhesive agent layer, causing the metal wires to come into contact with the electrodes or the conductive adhesive agent or the like present between the metal wires and the electrodes.

The adhesive agent layer 30 and the other adhesive agent layer may have the same composition or different compositions.

A thickness of the other adhesive agent layer is preferably in a range from 3 µm to 150 µm, more preferably in a range from 5 µm to 100 µm as the thickness of the adhesive agent layer 30.

The sheet-shaped heat-generating element may include electrodes sandwiched between layers of the quasi-sheet structure and the other adhesive agent layer and may include another base on a surface of the other adhesive agent layer opposite a surface facing the quasi-sheet structure. For instance, in a case of the second exemplary embodiment, the sheet-shaped heat-generating element 10A may have, in a region where the electrodes are formed in a plan view, a stacking structure of the base 32 / the adhesive agent layer 30 / the quasi-sheet structure 20 / the electrodes / the other adhesive agent layer / the other base. In such an exemplary embodiment, the bases are present on outermost surfaces of the sheet-shaped heat-generating element 10A on both sides with the contact between the electrodes and the quasi-sheet structure 20 maintained, which allows a user to place as required the sheet-shaped heat-generating element 10A as an independent single sheet at a desired target portion. Further, the sheet-shaped heat-generating element 10A has, in a region where no electrodes are formed in a plan view, a stacking structure of the base 32 / the adhesive agent layer 30 / the quasi-sheet structure 20 / the other adhesive agent layer / the other base, which enhances an effect in preventing position deviation or the like of the metal wires 22by virtue of the presence of the other adhesive agent layer between the metal wires 22 in the quasi-sheet structure and the other base. It should be noted that the metal wires 22 may be the metal wires 22C in a wavy shape (see Fig. 6).

The sheet-shaped heat-generating element s according to the first exemplary embodiment to the fourth exemplary embodiment may each include another adhesive agent layer on the second adhesive surface 30B (see Fig. 2) of the adhesive agent layer 30 with a support layer in between.

Examples of the support layer include paper, a thermoplastic resin film, a cured film of a curable resin, metallic foil, and glass film. Examples of the thermoplastic resin film include polyester, polycarbonate, polyimide, polyolefin, polyurethane, and acrylic resin films.

The heat generator 50 according to the fifth exemplary embodiment may include no adhesive agent layer 30. In this implementation, it is preferable that at least a part of the quasi-sheet structure 20D be fixed to an adherend by fixing means. For instance, an edge portion of the quasi-sheet structure 20D may be fixed to the adherend by a fixing member, only a pair of opposite edge portions of the quasi-sheet structure 20D (only pairs of opposite end portions of the plurality of metal wires 22) may be fixed to the adherend by the fixing member, or the entirety of the quasi-sheet structure 20D may be fixed to the adherend by the fixing member.

The fixing means is not limited but examples thereof include a for instance, a double-sided tape, a heat-sealing film, solder, and a crimping tool (e.g., a clip and a vise). It is preferable that the fixing means be selected as required for a material of the adherend. A location of the fixing means is not limited.

### Examples

The invention will be more specifically described with reference to Examples. It should be noted that these Examples are not intended to limit the scope of the invention.

### Example 1

A sticky sheet (MTAR-1 provided by MeCan Imaging Inc.) with a sticky agent layer (a pressure-sensitive adhesive agent layer) provided on a 50-µm-thick polyethylene terephthalate film as a base was prepared.

A copper-plated tungsten wire (manufactured by TOKUSAI TungMoly Co., LTD.) was prepared as a core. Regarding this wire, a thickness of a metal coating film of copper plating is 0.1 µm and a diameter including the plating layer is 20 µm. The first metal is tungsten and the second metal is copper.

Next, the sticky sheet was creaselessly wound on a drum member having a rubber outer circumferential surface with a surface of the pressure-sensitive adhesive agent layer facing outward and both circumferential end portions of the sticky sheet were fixed with a double-sided tape. After the metal wire wound on a bobbin was stuck on the surface of the pressure-sensitive adhesive agent layer of the sticky sheet located near an end portion of the drum member, the metal wire was reeled on the drum member while being unwound and the drum member was moved little by little in a direction parallel with a drum axis, causing the metal wires to be helically wound on the drum member at regular intervals. The interval between the metal wires was 3 mm. A quasi-sheet structure of the metal wires was thus formed by arranging the plurality of metal wires on the surface of the pressure-sensitive adhesive agent layer of the sticky sheet with distances between adjacent ones of the metal wires kept constant.

The sticky sheet was cut in parallel with the drum axis along with the metal wires, thereby obtaining a sheet-shaped heat-generating element with the quasi-sheet structure stacked on the adhesive agent layer.

Meanwhile, the same sticky sheet as one used for producing the sheet-shaped heat-generating element was prepared. A pair of strip-shaped copper plate electrodes (10 mm × 40 mm, 10 µm thick) were arranged on an sticky agent layer of this sticky sheet at a distance of 250 mm in parallel with each other while positions of respective both ends thereof were aligned. The sheet-shaped heat-generating element produced in each example was stuck to electrode installation positions with a longitudinal direction of the metal wires being perpendicular to a longitudinal direction of the electrodes. The sheet-shaped heat-generating element and the electrodes were bonded to each other via the sticky agent layer exposed between the metal wires. In this regard, an adjustment was made to cause the number of the metal wires connected between both electrodes to be 14. The metal wires were thus brought into contact with both electrodes, thereby obtaining a sheet-shaped heat generator. It should be noted that Base Body in Table 2 refers to a copper plate.

### Example 2

A sheet-shaped heat-generating element and a heat generator were obtained in the same manner as in Example 1 except that a gold-plated brass wire with a nickel layer in between (manufactured by TOKUSAI TungMoly Co., LTD.) was used in place of the copper-plated tungsten wire. Regarding this wire, a thickness of a metal coating film of the gold plating is 0.1 µm, a 0.1-µm-thick nickel layer is provided as an intermediate layer, and a diameter including the plating layer and the nickel layer is 30 µm. The first metal is brass and the second metal is gold.

It should be noted that a ratio between copper and zinc in the brass wire is 65 mass%:35 mass%.

### Example 3

A sheet-shaped heat-generating element and a heat generator were obtained in the same manner as in Example 1 except that a gold-plated nickel wire (manufactured by TOKUSAI TungMoly Co., LTD.) was used in place of the copper-plated tungsten wire. Regarding this wire, a thickness of a metal coating film of the gold plating is 0.1 µm and a diameter including the plating layer is 30 µm. The first metal is nickel and the second metal is gold.

### Comparative 1

A sheet-shaped heat-generating element and a heat generator were obtained in the same manner as in Example 1 except that a tungsten wire with no metal coating film formed therearound was used.

### Comparative 2

A sheet-shaped heat-generating element and a heat generator were obtained in the same manner as in Example 2 except that a brass wire with no metal coating film formed therearound was used.

### Comparative 3

A sheet-shaped heat-generating element and a heat generator were obtained in the same manner as in Example 1 except that a tungsten wire with a 0.1-µm-thick graphite layer formed therearound (manufactured by TOKUSAI TungMoly Co., LTD.) was formed in place of the copper-plated tungsten wire.

### Example 4

A sheet-shaped heat-generating element and a heat generator were obtained in the same manner as in Example 1 except that a pair of strip-shaped gold-plated copper plate electrodes (10 mm × 40 mm, 10 µm thick) were used as the electrodes in place of the pair of strip-shaped copper plate electrodes and a gold-plated tungsten wire (manufactured by TOKUSAI TungMoly Co., LTD.) was used as the core in place of the copper-plated tungsten wire (manufactured by TOKUSAI TungMoly Co., LTD.). The gold-plated copper plate electrodes each include, on a surface of a copper plate as a base body, a 0.1-µm-thick nickel layer as a buffer layer and a 0.1-µm-thick gold layer as a plating layer in this sequence. Further, regarding the gold-plated tungsten wire, a thickness of a metal coating film of the gold plating is 0.1 µm and a diameter including the plating layer is 20 µm.

### Various Characteristic Values and Measurement

### Volume Resistivity and Reference Electrode Potential

Tables 1 and 2 show volume resistivities and reference electrode potentials of the metals used in the examples.

In Table 1, "C" stands for graphite.

### Diameter D of Metal Wires, Thickness of Metal Coating Film, etc.

The diameter D of the metal wires of the sheet-shaped heat-generating element obtained in each examples was measured by the above-described method. Table 1 shows measurement results of the diameter D of the metal wires, the thickness of the metal coating film, etc.

**Table 1**

| | Wire | | | | | | | | | | | |
|---|---|---|---|---|---|---|---|---|---|---|---|---|
| | Core | | | Intermediate Layer | | Metal Coating Film | | | | Coating Film Other Than Metal | | Wire Diameter D (*µ*m) |
| | Metal Species (First Metal) | Volume Resistivity R_{M1} (Ω·cm) | Reference Electrode Potential E_{M1} (V) | Metal Species | Thick ness (*µ*m) | Metal Species (Second Metal) | Volume Resistivity R_{M2} (Ω·cm) | Reference Electrode Potential E_{M2} (V) | Thick ness (*µ*m) | Material Species of Coating Film | Thick ness (*µ*m) | |
| Ex. 1 | W | 5.7×10⁻⁶ | less than +0.34 | - | - | Cu | 1.1×10⁻⁶ | +0.34 | 0.1 | - | - | 20 |
| Ex. 2 | brass | 7.0×10⁻⁶ | less than +0.34 | Ni | 0.1 | Au | 2. 4×10⁻⁶ | +1.52 | 0.1 | - | - | 30 |
| Ex. 3 | Ni | 6.8×10⁻⁶ | -0.26 | - | - | Au | 2.4×10⁻⁶ | +1.52 | 0.1 | - | - | 30 |
| Comp. 1 | W | 5.7×10⁻⁶ | less than +0.34 | - | - | - | - | - | - | - | - | 20 |
| Comp. 2 | brass | 7.0×10⁻⁶ | less than +0.34 | - | - | - | - | - | - | - | - | 30 |
| Comp. 3 | W | 5.7×10⁻⁶ | less than +0.34 | - | - | - | - | - | - | C | 0.1 | 20 |
| Ex. 4 | W | 5.7×10⁻⁶ | less than +0.34 | - | - | Au | 2.4×10⁻⁶ | +1.52 | 0.1 | - | - | 20 |

**Table 2**

| | Electrode | | | | | | | | |
|---|---|---|---|---|---|---|---|---|---|
| | Base Body | | | Buffer Layer Plating Layer | | | | | |
| | Metal Species | Volume Resistivity (Ω·cm) | Reference Electrode Potential (V) | Metal Species | Thickness (*µ*m) | Metal Species | Volume Resistivity (Ω·cm) | Reference Electrode Potential (V) | Thickness (*µ*m) |
| Ex. 1 | Cu | 1.7×10⁻⁶ | +0.34 | - | - | - | - | - | - |
| Ex. 2 | Cu | 1.7×10⁻⁶ | +0.34 | - | - | - | - | - | - |
| Ex. 3 | Cu | 1.7×10⁻⁶ | +0.34 | - | - | - | - | - | - |
| Comp. 1 | Cu | 1.7×10⁻⁶ | +0.34 | - | - | - | - | - | - |
| Comp. 2 | Cu | 1.7×10⁻⁶ | +0.34 | - | - | - | - | - | - |
| Comp. 3 | Cu | 1.7×10⁻⁶ | +0.34 | - | - | - | - | - | - |
| Ex. 4 | Cu | 1.7× 10⁻⁶ | +0.34 | Ni | 0.1 | Au | 2.4×10⁻⁶ | +1.52 | 0.1 |

### Evaluation of Heat Generator

### Rise Rate of Resistance Between Electrodes After Storage Under Hygrothermal Environment

A resistance R₁ [Ω] between both electrodes of the heat generator produced in each example was measured with an electric tester.

Next, the heat generator produced in each example was stored under hygrothermal environment of an 85-degrees-C relative humidity of 85% for 20 hours and a resistance R₂ (a resistance R₂ between the electrodes after the storage under the hygrothermal environment) [Ω] was measured in the same manner as the resistance R₁. A rise rate (a value given by multiplying (R₂ - R₁)/R₁ by 100) [%] of the resistance between the electrodes after the storage under the hygrothermal environment was calculated from values of R₁ and R₂. Table 3 shows results.

### Abnormal Heat Generation of Electrode Portions

A voltage of 2 V was applied between both electrodes of the heat generator having been stored under the hygrothermal environment described above and, after 30 seconds, a temperature of the electrode portions in contact with the metal wires was measured with a radiation thermometer (manufactured by FIR Systems, Inc., Product No. C2). If the temperature of the electrode portions was higher than that of a heat generation portion other than the electrode portions, abnormal heat generation was determined to be "Yes". If the temperature of the electrode portions was equal to or lower than the temperature of the heat generation portion other than the electrode portions, abnormal heat generation was determined to be "No".Table 3 shows results.

**Table 3**

| | Resistance Between Electrodes | | | Heat Generation of Each Portion | | |
|---|---|---|---|---|---|---|
| | R₁ [Ω] | R₂ [Ω] | Rise Rate [%] ((R₂-R₁)/R₁)^{∗}100 | Other Than Electrode Portion [°C] | Electrode Portion [°C] | Abnormal Heat Generation of Electrode Portion |
| Ex. 1 | 3.8 | 4.2 | 10.53 | 34.5 | 32. 1 | No |
| Ex. 2 | 2.1 | 2.2 | 4. 76 | 38.5 | 32.7 | No |
| Ex. 3 | 2.2 | 2.3 | 4. 55 | 39.1 | 31.9 | No |
| Comp. 1 | 4.3 | 5.9 | 37.21 | 35.6 | 37.0 | Yes |
| Comp. 2 | 3.0 | 6.2 | 106.67 | 33. 7 | 39.2 | Yes |
| Comp. 3 | 5.7 | 6.2 | 8.77 | 33.9 | 37.7 | Yes |
| Ex. 4 | 3.7 | 3.8 | 2. 70 | 35.1 | 29.8 | No |

As shown in Table 3, Examples 2 to 4, each of which used the metal wire including the core containing the first metal as the main component and the metal coating film containing the second metal as the main component and disposed on the exterior side of the core, were smaller in rise rate of the resistance between the electrodes as compared with Comparatives 1 and 2, each of which used the tungsten wire or the brass wire including no metal coating film, and Comparative 3, which used the tungsten wire including the graphite layer as a coating film, and had no abnormal heat generation of the electrode portions.

Example 1 was smaller in rise rate in the resistance between the electrodes as compared with Comparatives 1 and 2 and had no abnormal heat generation of the electrode portions. Further, although being smaller in rise rate of the resistance between the electrodes as compared with Comparatives 1 and 2 each using the tungsten wire or the brass wire including no metal coating film, Example 1 was slightly larger in rise rate of the resistance between the electrodes as compared with Comparative 3 using the tungsten wire including the graphite layer as the coating film. Meanwhile, the abnormal heat generation of the electrode portions of the heat generator was not caused in Example 1, whereas the abnormal heat generation of the electrode portions was caused in each of Comparatives 1 to 3.

Therefore, when attached to electrodes and caused to generate heat, each of the sheet-shaped heat-generating element s of Examples allows for reducing the resistance of the connection between the metal wires and the electrodes. In addition, the abnormal heat generation of the electrode portions can be reduced.

Further, when caused to generate heat, each of the heat generators of Examples allows for reducing the resistance of the connection between the metal wires and the electrodes. In addition, the abnormal heat generation of the electrode portions can be reduced.

### EXPLANATION OF CODE(S)

10, 10A, 10B, 10C, 10D, 10E...sheet-shaped heat-generating element, 20, 20C, 20D, 20E...quasi-sheet structure, 20A...first surface, 20B...second surface, 22, 22C...metal wire, 30...adhesive agent layer, 30A...first adhesive surface, 30B...second adhesive surface, 32...base, 34...release layer, 40...electrode, 50...heat generator, 221...core, 222...metal coating film, 40A, 401, 402, 403...electrode, 402A, 403A...electrode base body, 402B, 403B...coating layer, 403C... buffer layer

## Claims

1. A sheet-shaped heat-generating element comprising a quasi-sheet structure comprising a plurality of metal wires arranged at an interval, the metal wires each comprising a core comprising a first metal as a main component and a metal coating film provided on an exterior side of the core, the metal coating film comprising a second metal different from the first metal as a main component, wherein
a volume resistivity of the first metal is in a range from 3.0 × 10⁻⁶ [Ω·cm] to 5.0 × 10⁻⁴ [Ω·cm], and
a reference electrode potential of the second metal is +0.34 V or more.

2. The sheet-shaped heat-generating element according to claim 1, wherein
the second metal is at least one selected from the group consisting of gold, platinum, palladium, silver, copper, and an alloy, and
the alloy for the second metal comprises at least two metals selected from the group consisting of gold, platinum, palladium, silver, and copper.

3. The sheet-shaped heat-generating element according to claim 1 or 2, wherein a volume resistivity of the second metal is less than 2.0 × 10⁻⁵ [Ω·cm].

4. The sheet-shaped heat-generating element according to any one of claims 1 to 3, wherein the first metal is tungsten or molybdenum.

5. The sheet-shaped heat-generating element according to any one of claims 1 to 4, wherein a diameter of each of the metal wires is in a range from 13 µm to 50 µm.

6. The sheet-shaped heat-generating element according to any one of claims 1 to 5, further comprising an adhesive agent layer, wherein the quasi-sheet structure is in contact with the adhesive agent layer.

7. The sheet-shaped heat-generating element according to claim 6, further comprising a base on a side of the adhesive agent layer opposite the quasi-sheet structure.

8. The sheet-shaped heat-generating element according to any one of claims 1 to 7, wherein the metal wires are brought into contact with electrodes in use.

9. A sheet-shaped heat-generating element comprising a quasi-sheet structure comprising a plurality of metal wires arranged at an interval, the metal wires each comprising a core comprising a first metal as a main component and a metal coating film provided on an exterior side of the core, the metal coating film comprising a second metal different from the first metal as a main component, wherein
the first metal is tungsten, iron, molybdenum, nickel, titanium, stainless steel, brass, phosphor bronze, beryllium copper, iron nickel, Nichrome, Kanthal, Hastelloy, or rhenium tungsten,
the second metal is at least one selected from the group consisting of gold, platinum, palladium, silver, copper and an alloy, and
the alloy for the second metal comprises at least two metals selected from the group consisting of gold, platinum, palladium, silver, and copper.

10. A heat generator comprising:
the sheet-shaped heat-generating element according to any one of claims 1 to 9; and
electrodes, wherein
the plurality of metal wires of the sheet-shaped heat-generating element are arranged while being at least partially connected to the electrodes,
a surface of the electrodes connected to the metal wires is formed of a third metal, and
a reference electrode potential of the third metal is +0.5 V or more.

11. A heat generator comprising:
the sheet-shaped heat-generating element according to any one of claims 6 to 8; and
electrodes, wherein
the sheet-shaped heat-generating element is bonded to the electrodes via the adhesive agent layer, and
the metal wires are in contact with the electrodes.
